# EUROPEAN PATENT APPLICATION

(11) **EP 3 264 294 A2**
(43) Date of publication of application: **03.01.2018**
(21) Application number: 17179186.6
(22) Date of filing: 30.06.2017
(51) Int. Cl.: G06F 17/30, G06F 21/32

(54) **BIOMETRIC INFORMATION MANAGEMENT SYSTEM SECURITY**

(30) Priority: 30.06.2016 GB 201611516
(71) Applicant: Hiscox Underwriting Group Services Limited, London Greater London EC3A 6HX (GB)
(72) Inventor: SOMMER, Miroslav, London, Greater London EC3A 6HX (GB); FEATONBY, Keith, London, Greater London EC3A 6HX (GB); HAEGENS, Robert, London, Greater London EC3A 6HX (GB); WANI, Ashik, London, Greater London EC3A 6HX (GB)
(74) Representative: Jaszek, Ryszard

(57) **Abstract**

A method of providing a user with access to an information processing system, comprising: detecting a biometric property of the user; querying the user identity using the detected biometric property against a user directory database and, if the user is identified: determining a user role; and generating a user interface with user-selectable options and user-input fields pre-populated in dependence on the determined user role and, preferably, in dependence on the biometric property importing a document into the information processing system.

## Description

This invention relates to an information management system. The invention is particularly concerned with providing biometric-mediated access to the fast and secure import of documents into the system and with efficient searching of related data once within the system. The invention has potentially wide relevance to any organisation dealing securely with large numbers of documents. Potentially the invention may be implemented as part of a fully-automated, self-actuating robotic document processing system.

Many organisations are currently undertaking work to become 'paperless' (or at least "paper-light'), digitising their voluminous paper records and seeking to replace traditional paper-based workflows. Some organisations face particular difficulties in making such a transition because their ways of working have been established over many decades and consequently embed important elements of trust and traceability. The present invention seeks to address at least some of these issues.

According to an aspect of the invention there is provided a method of providing a user with access to an information processing system, comprising: detecting a biometric property of the user; querying the user identity using the detected biometric property against a user directory database and, if the user is identified: determining a user role; and generating a user interface with user-selectable options and user-input fields pre-populated in dependence on the determined user role. Preferably, the biometric property comprises one or more of: palm or fingerprint, retina scan, voiceprint.

Preferably, the user-selectable options and user-input fields pre-populated in dependence on the determined user identity.

Preferably, the method further comprises, in dependence on the biometric property, importing a document into an information processing system, comprising: scanning a first document page and subsequently a second document page into a file buffer, first and second scanned page files being stored in the buffer in a first file format; processing asynchronously and/or in parallel the first and second scanned page files and converting them into a second file format; collating first and second processed scanned page files into a composite output file in a third file format; and storing the output file in memory associated with the information processing system.

Preferably, the method further comprises receiving metadata input in respect of the document while the document is being scanned; and associating the metadata with the output file. Preferably, the document is processed in dependence on the received metadata. Preferably, processing the document generates a task in the information processing system.

The metadata may be input by a user initiating scanning of the document. The metadata may be generated via optical character recognition of one or more of: a document page, a scanned page file and the output file.

In some embodiments there is also provided a method of importing a document into an information processing system, comprising: detecting a user interaction with an item of electronic mail or email; determining the presence of one or more attachments associated with the email; presenting the user with a user interface for the user to specify options for processing each determined attachment; and importing the attachment into the information processing system in dependence on the options specified by the user.

Preferably, the method further comprises receiving metadata input in respect of the document and/or attachment and associating the metadata with the document and/or attachment. The metadata may be input by the user.

Preferably, importing the document generates a task in the information processing system.

Preferably, the method further comprises importing a plurality of document attachments in parallel.

In some embodiments there is also provided a method of optimising a query of a database, comprising: replicating a first database comprising the data to which the query relates to a second database; denormalising the data stored in the second database; and running the query against the second database.

Preferably, the first database is a read/write database. Preferably, the second database is a read-only database.

Preferably, denormalising comprises reducing the number of tables in the second database, preferably resulting in a reduction in the number of database tables by 50% or more, preferably 60% or more, 70% or more, 20% or more or at least 90%.

Denormalising may comprise one or more of:
- removing from the database data which can be computed and/or determined from values stored in the database.
- inserting into the database data relating to the type of queries expected to be made of the database.
- comprises mapping the data to a hierarchical domain model.
- calculating an aggregation on a level of the hierarchical domain model.

Preferably, the method further comprises indexing the second database. The indexing may comprise a standard and/or text index.

In some embodiments there is also provided a method of providing client access to data stored in a remote database over a network, comprising: populating a first cache at a server on the network with data from the database; responding to a first client database query with data from the first server cache while populating a second cache at a server on the network with data from the database; and responding to a second client database query with data from the second server cache while re-populating the first server cache with updated data from the database.

Preferably, the method further comprises: storing data received in respect of a client database query at a local cache at the client; and responding to a subsequent client database query with data from the local cache at the client.

According to another aspect of the invention there is provided apparatus for providing a user with access to an information processing system, comprising: a biometric detector for detecting a biometric property of the user; means for querying the user identity using the detected biometric property against a user directory database and, if the user is identified: means for determining a user role; and means for generating a user interface with user-selectable options and user-input fields pre-populated in dependence on the determined user role.

Preferably, the means for generating a user interface is adapted to pre-populate the user-selectable options and user-input fields in dependence on the determined user identity.

Preferably, the apparatus further comprises apparatus for importing a document into an information processing system, comprising: a scanner adapted to scan a first document page and subsequently a second document page into a file buffer, wherein the first and second scanned page files are stored in the buffer in a first file format; a processor adapted to: process asynchronously and/or in parallel the first and second scanned page files and to convert them into a second file format; to collate first and second processed scanned page files into a composite output file in a third file format; and to store the output file in memory associated with the information processing system.

Preferably, the processor is adapted to receive metadata input in respect of the document while the document is being scanned and to associate the metadata with the output file.

Preferably, the processor is adapted to process the document in dependence on the received metadata.

Preferably, the processor is adapted to generate a task in the information processing system.

In some embodiments there is also provided apparatus for importing a document into an information processing system, comprising: a processor adapted to: detect a user interaction with an item of electronic mail or email; to determine the presence of an attachment associated with the email; to present the user with a user interface for the user to specify options for processing each determined attachment; and to import the attachment into the information processing system in dependence on the options specified by the user.

Preferably, the apparatus further comprises means for receiving metadata input in respect of the document and/or attachment and wherein the processor is adapted to associate the metadata with the document and/or attachment.

The processor may be adapted to generate a task in the information processing system on importing a document.

The apparatus may further comprise means for importing a plurality of document attachments in parallel.

In some embodiments there is also provided apparatus for optimising a query of a database, comprises: means for replicating a first database comprising the data to which the query relates to a second database; means for denormalising the data stored in the second database; and means for running the query against the second database.

Preferably, the means for denormalising comprises means for reducing the number of tables in the second database.

Preferably, the means for denormalising comprises means for removing from the database data which can be computed and/or determined from values stored in the database.

Preferably, the means for denormalising further comprises means for inserting into the database data relating to the type of queries expected to be made of the database.

Preferably, the means for denormalising further comprises means for mapping the data to a hierarchical domain model, more preferably, means for calculating an aggregation on a level of the hierarchical domain model.

Preferably, the apparatus further comprises means for indexing the second database. The indexing may comprise standard and/or text indexing.

In some embodiments there is also provided apparatus for providing client access to data stored in a remote database over a network, comprising: means for populating a first cache at a server on the network with data from the database; means for responding to a first client database query with data from the first server cache while populating a second cache at a server on the network with data from the database; and means for responding to a second client database query with data from the second server cache while re-populating the first server cache with updated data from the database.

Preferably, the apparatus further comprises: means for storing data received in respect of a client database query at a local cache at the client; and means for responding to a subsequent client database query with data from the local cache at the client.

Further aspects of the invention are described by any accompanying claims.

The invention extends to methods and/or apparatus substantially as herein described with reference to the accompanying drawings.

Any apparatus feature as described herein may also be provided as a method feature, and vice versa. As used herein, means plus function features may be expressed alternatively in terms of their corresponding structure.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

These and other aspects of the invention will become apparent from the following exemplary embodiments that are described with reference to the following figures in which:
Figures 1 and 2 show an information management system in overview, respectively in terms of physical infrastructure and logical topology;
Figure 3 shows the database replication process;
Figure 4 shows a scanning station;
Figures 5 to 8 show various aspects of the palm scanning security subsystem;
Figure 9 shows the scanning security process;
Figure 10 shows the scanning process;
Figure 11 shows the web upload process; and
Figure 12 shows the caching process.

### Overview

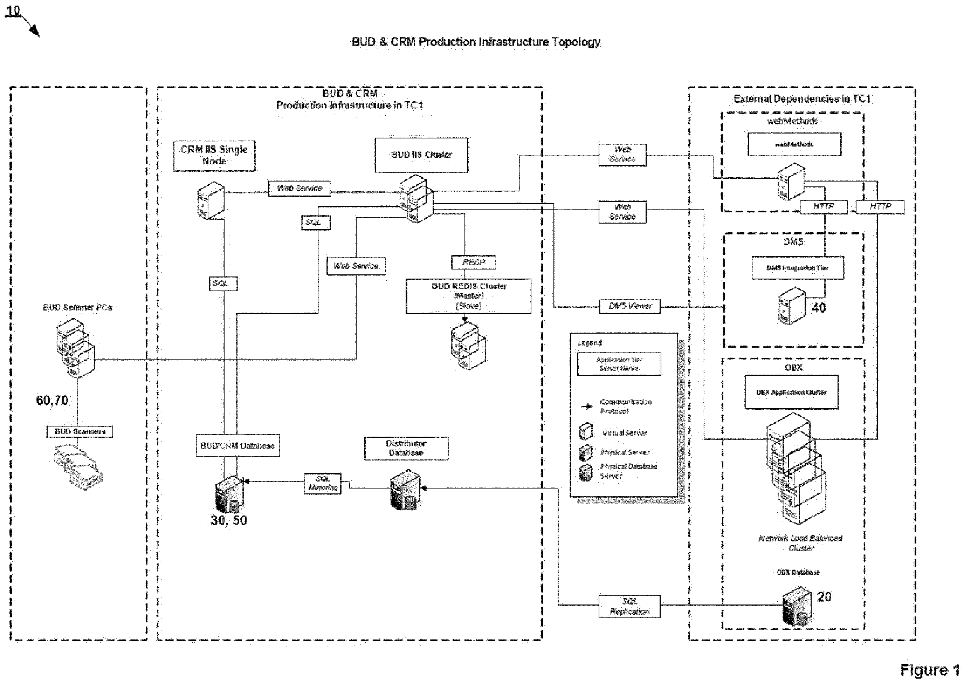

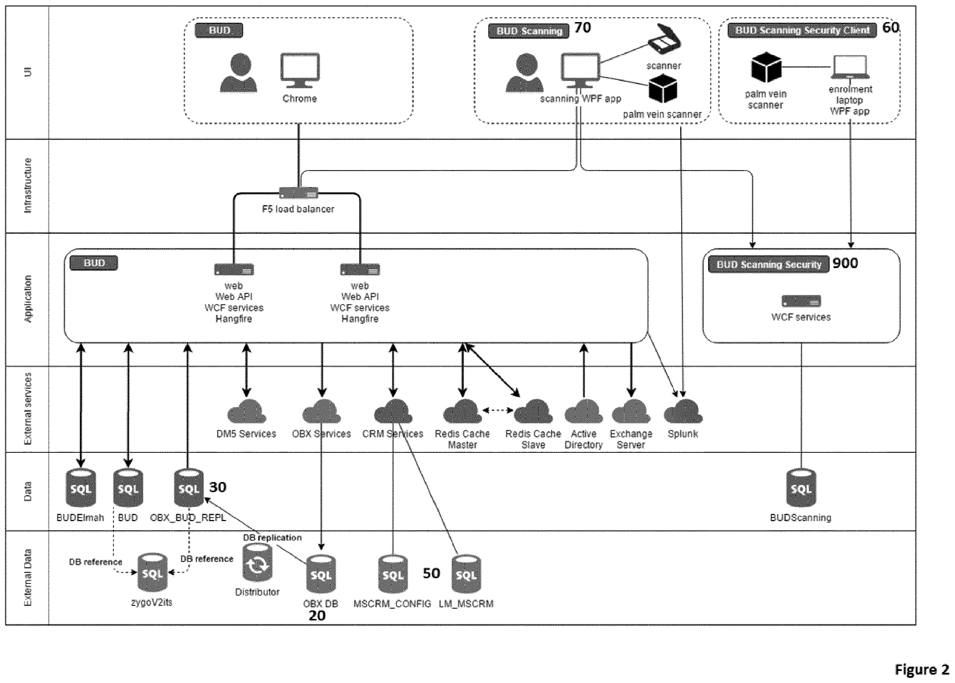

Figures 1 and 2 show an information management system 10 in overview, respectively in terms of physical infrastructure and logical topology.

System 10 comprises the following:
- source database (eg. OpenBox OBX) 20
- query or replica database (BUD) 30
- document management system (DMS) 40
- customer relationship management system (CRM) 50
- security subsystem 60, 900
- document input (scanning) subsystem 70
- a plurality of support servers facilitating data replication, database queries, user management, email and directory services, caching, load balancing and view generation in the form of a web-based portal and suite of applications

The information management system 10 may be implemented using Microsoft products (eg. Windows servers running MS-SQL and IIS), including code developed using the Microsoft .NET framework and related technologies such as Windows Presentation Foundation (WPF) and Windows Communication Foundation (WCF) - or other suitable ecosystem.

The document scanning subsystem comprises a high-performance scanner, such as a Fujitsu FI-6800, capable of operation at say 130 ppm (simplex) / 260 ipm (duplex).

Management information extracted from the query database 30 is presented via 'dashboard' graphic generated via a visualisation package such as Kendo UI by Progress Software Corporation.

Performance of key elements of the system 10 and the services they provide are monitored typically against a 90-day activity baseline using monitoring software such as Splunk, by Splunk, Inc.

### Database optimisation

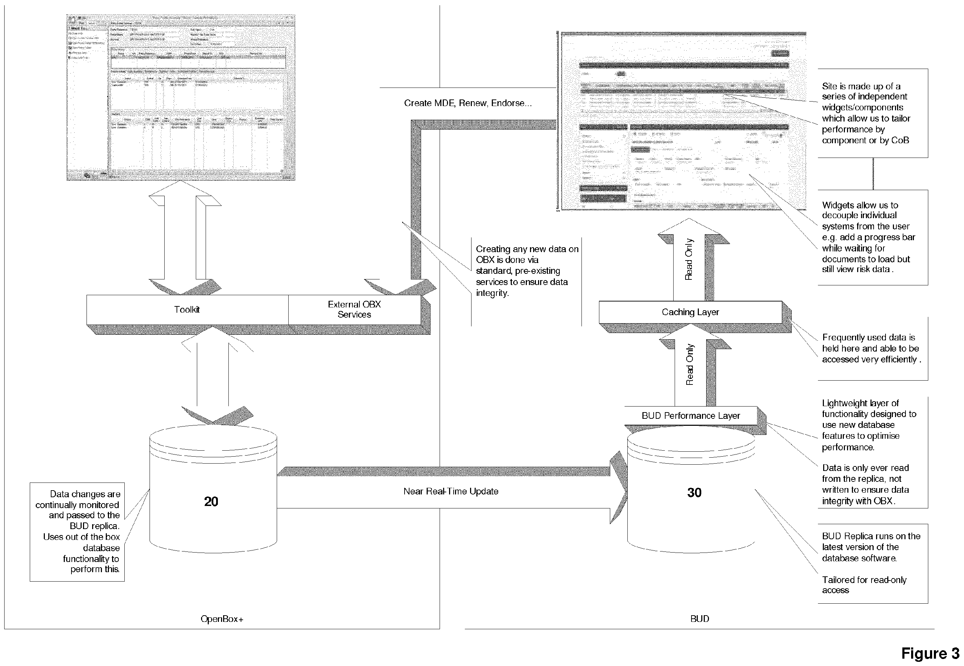

Figure 3 shows the database replication process.

Typically, source database OBX 20 is an off-the-shelf database which has been preconfigured, for example as a policy-administration system, for use in a particular industry.

The use of industry-standard data structures means that database 20 serves well as a primary data depository. However, some enterprises within the particular industry may find the speed of certain database queries to be unduly affected by the data structures used. For example, name searches may be slow due to requiring navigation of multiple hierarchies.

Data from the database 20 is therefore replicated to a read-only database 30 which is then optimised for the particular enterprise. Typically, both databases 20 and 30 are transactional databases, but whereas database 20 has a relational data structure database 30 may be denormalised into a flatter structure.

Generating the query database 30 involves the following steps:
1. Replication. This is performed using standard SQL functionality on an ad-hoc basis, in near real-time (eg. monitored every 5-6 secs). Whenever a change is made to data of the source database 20 in some embodiments the entire database is replicated to the query database 30. In alternative embodiments replication is partial (eg. only a subset, say 100 of 300, of tables or only those containing changed data rather than the entire say 60-80 GB of database) and/or at pre-determined intervals. The data replicated in the query database 30 initially has the same relational format as in the source database 20.
2. Denormalisation. Read performance of database 30 is improved by restructuring or denormalising the data, optimising it in view of typical queries which are expected to be run. Typical queries may be ranked and the steps taken to denormalise prioritised accordingly. This has the effect of reducing the number of database tables, effectively flattening the database structure for example by 50% or more, preferably 60% or more, 70% or more, 20% or more or even 90%. This reduces the number of parameters required to formulate a data query. The denormalisation may be partial. The number of parameters required for a query of database 30 may be 50% or less, preferably 40% or less, 30% or less, 20% or less or even 10% or less than required for an equivalent query of the source database 20. This in turn reduces the amount of time required to perform even a complex query, typically resulting in a twenty-fold speed increase with even the most complex query preferably taking no more than six seconds or so.
3. Indexing. The denormalised data in database 30 is indexed with standard and full-text indexing.

Further details of the denormalisation process are provided below.

In some embodiments additional layers provide further enhance the speed of searching:
- Performance layer - this is a lightweight layer of functionality designed to use database features to optimise performance. This mostly comprises multiple stored procedures, each optimized for a specific functionality and using the denormalised data tables and related indexes in the most effective way. A feature of MS SQL DB called "snapshot isolation" is used to read data from a snapshot of tables while data may be written concurrently to the same tables. Without this feature a database may be locked for reads thus causing delays to the end user interface; however, with this feature no locks and unnecessary delays are experienced.
- Caching layer - frequently used data is stored here to allow queries to be handled faster than if querying the query database 30 directly. This may also allow for relatively simple scaling and/or performance enhancements, whether by increasing the size and/or speed of the cache or introducing additional caches. This is discussed in more detail below.

### Scanning security subsystem

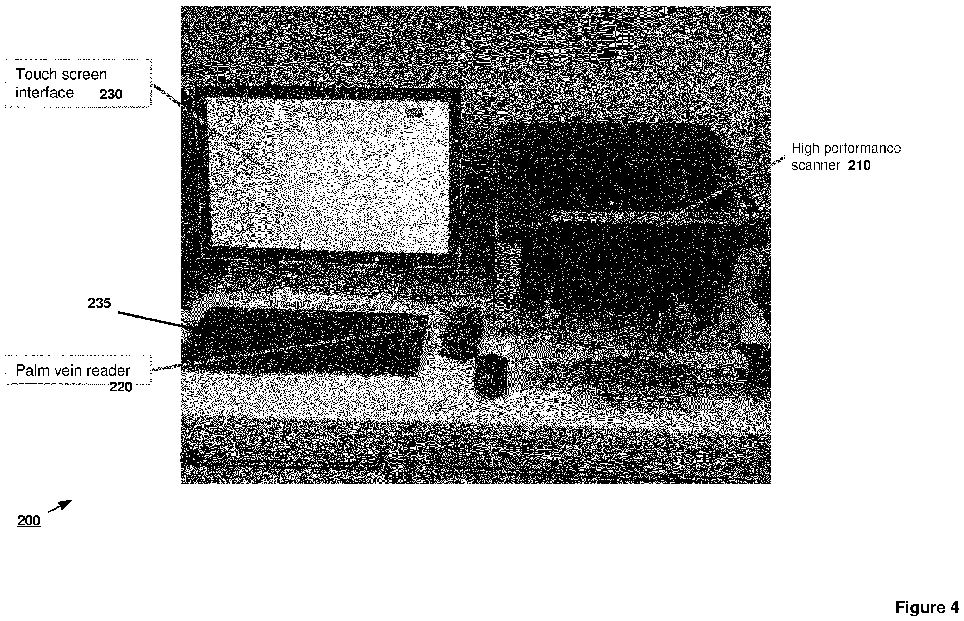

Figure 4 shows a scanning station 200, comprising high-performance document scanner 210, a palm reader 220 and a touch screen 230 and keyboard 235 interfaces to a computer (not shown).

Users are authenticated by means of palm reader 220 which detects the pattern of vein blood flow in the palm which is matched (in dependence on an accuracy score) to that previously registered to that user during an enrolment process.

Once authenticated, the user role (professional, assistant or administrator) is determined and suitable user functionality such as document characterisation options are configured and presented for selection on touch screen 230. For example, an initial screen may show:
- for a professional role, recent matters they or a relevant group have had involvement with.
- for an assistant role, who may assist one or more professionals, a list (ordered by likely relevance) of professionals or group / team from which to select. In some embodiments, the list is ordered in dependence on the location of the scanning station 200.
- for an administrator role, administrative access and/or a list of potential roles which to emulate.

Selection stages are omitted where they are evident from the identification of the user.

Relevant metadata fields for the document are pre-populated in dependence on the identified user, matter and any other determined data.

User rights are dually-dependent:
a) on network-level system security, as user permissions configured via a user directory service eg. Windows Active Directory
b) on database user roles, originating with user rights tables within the source database 20, albeit only a subset of roles and rights may be used for the query database 30

Roles and rights from the source and/or query databases 20,30 may be reproduced in the directory service to allow for user single sign-on.

Alternative embodiments may use different biometric authentication eg. iris scans, voiceprint etc.

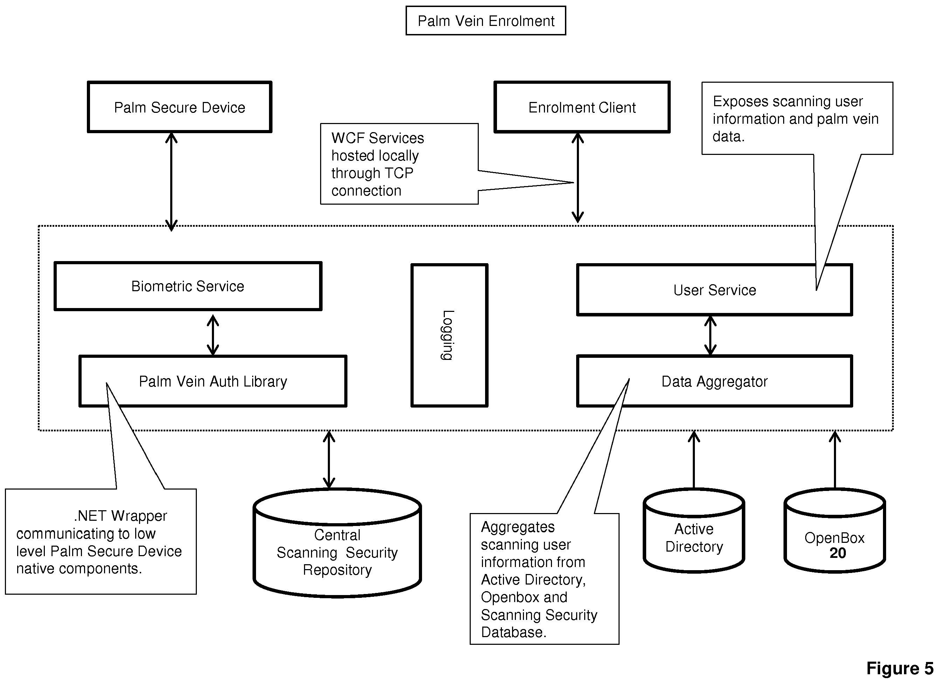

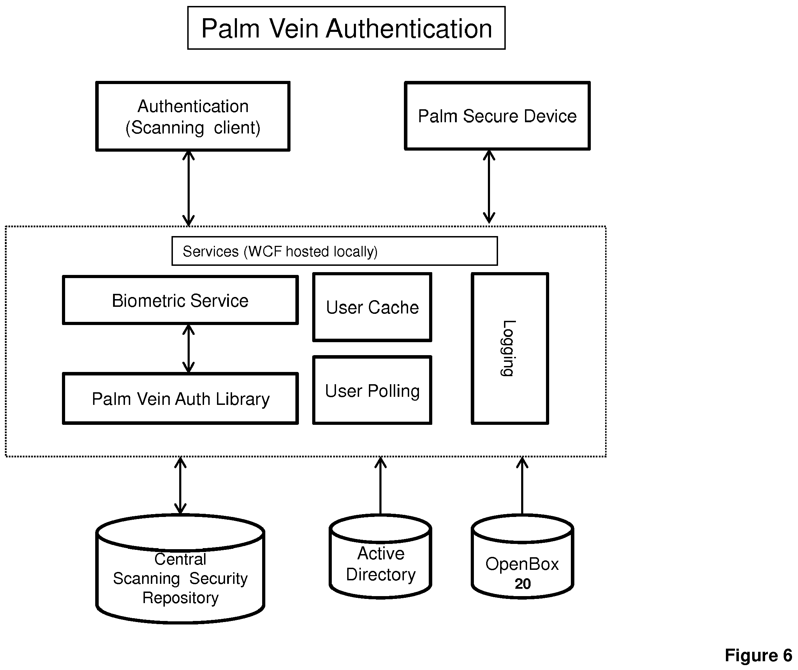

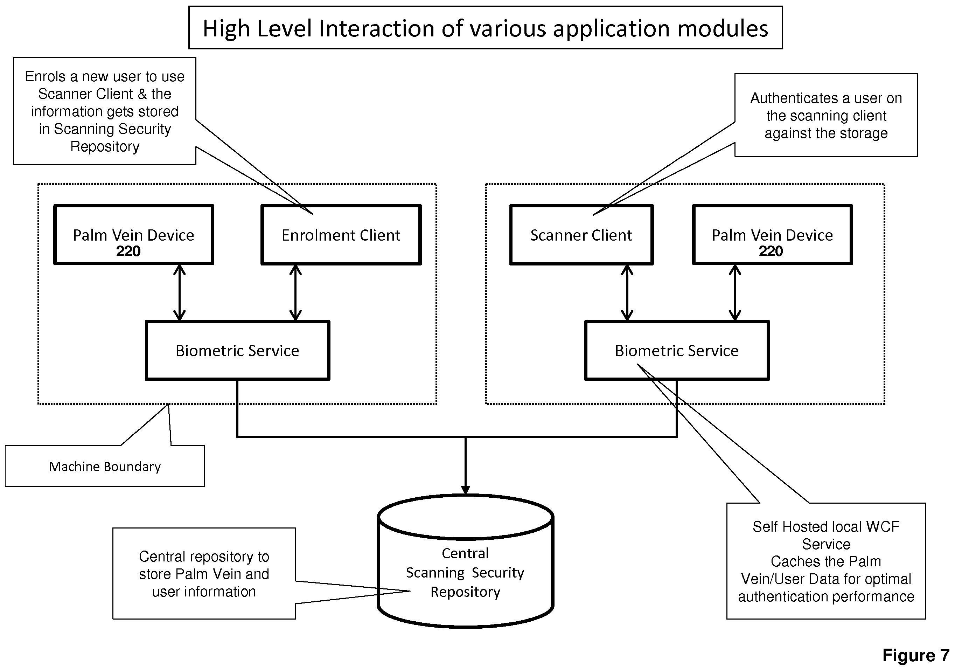

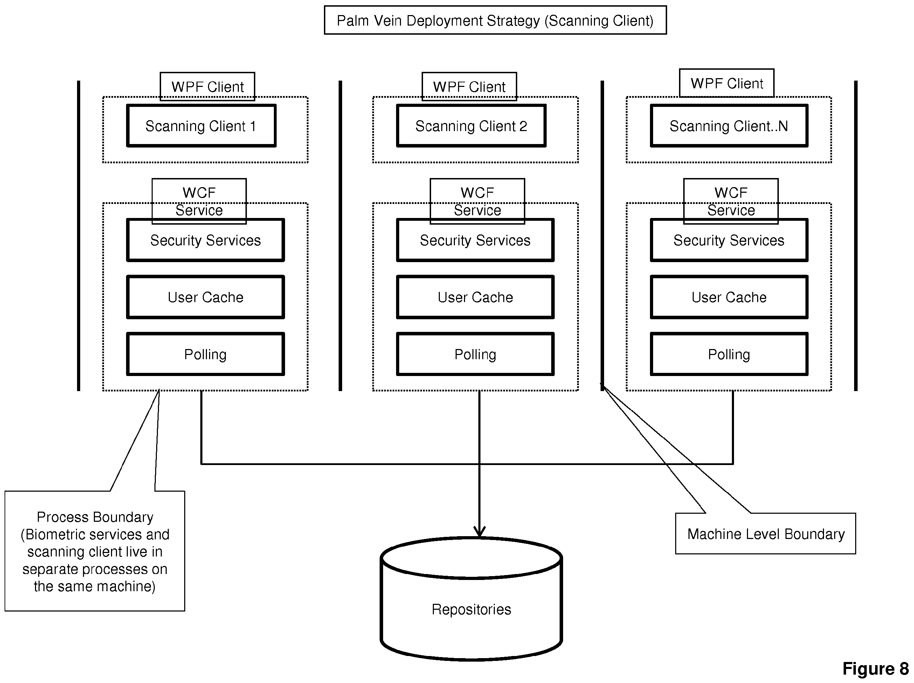

Figures 5 to 8 show various aspects of the palm scanning security subsystem.

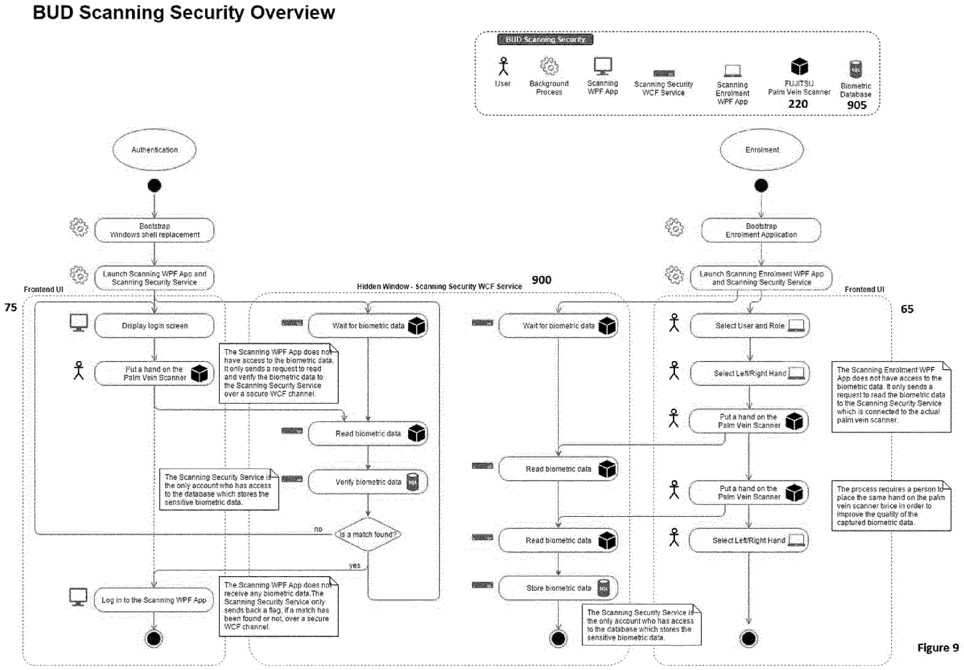

Figure 9 shows the scanning security process.

As shown, the scanning security process comprises three main components:
- enrolment application and associated UI 65
- authentication application and associated UI 75
- scanning security service 900

Only the security service 900 can access the (potentially highly sensitive) palm or other biometric data stored in the biometric database 905. Neither enrolment nor authentication applications can do so. Instead, each application can only send a request to the security service 900 for scanned biometric data to be verified against the biometric database 905.

### Document input

### - scanning

Paper documents are imported into the information management system 10 via scanning station 200. Generally, an authenticated user selects the type of document, specifies via the touchscreen interface 230 whether the scan is to be single or double-sided, scans the document via the scanner 210 and optionally adds notes via the keyboard 235. The scanned document is then processed in dependence on the metadata entered or determined, filed in the DMS 40 and the source database 20 is updated.

Tasks are generated and logged in the CRM system 50 in dependence on the scanned document, based on the document metadata which in turn is dependent on the user identification and role, the associated matter, characterisation information and/or notes entered. In some embodiments optical character recognition (OCR) is used to process documents and generate tasks automatically.

The scanner 210 is configured and communicated with via the TWAIN protocol and associated API to allow for fast scanning, background processing of scans and uploading of the scans into the relevant database(s).

Document scanning is performed asynchronously, with scanned documents placed into a queue for subsequent processing, freeing up the scanner 210 for the scanning of further documents. In effect, a multi-threaded, adaptive process enables scan generation, queue processing and output to DMS and source database to be performed concurrently. One way of implementing the queue is with the open-source framework Hangfire.

The scanner resolution is also optimised to maximise scanning speed while ensuring acceptable quality of the scanned documents.

All scans are held in a secure filesystem location. The user is notified that the scan has completed, for example by email.

Fault handling and security features include, in that event that a user is logged-off mid-scan when a scan subsequently completes, notifying the user of the existence of a scan and securely holding the scan until retrieved by the user. Partially-scanned documents are saved for subsequent completion.

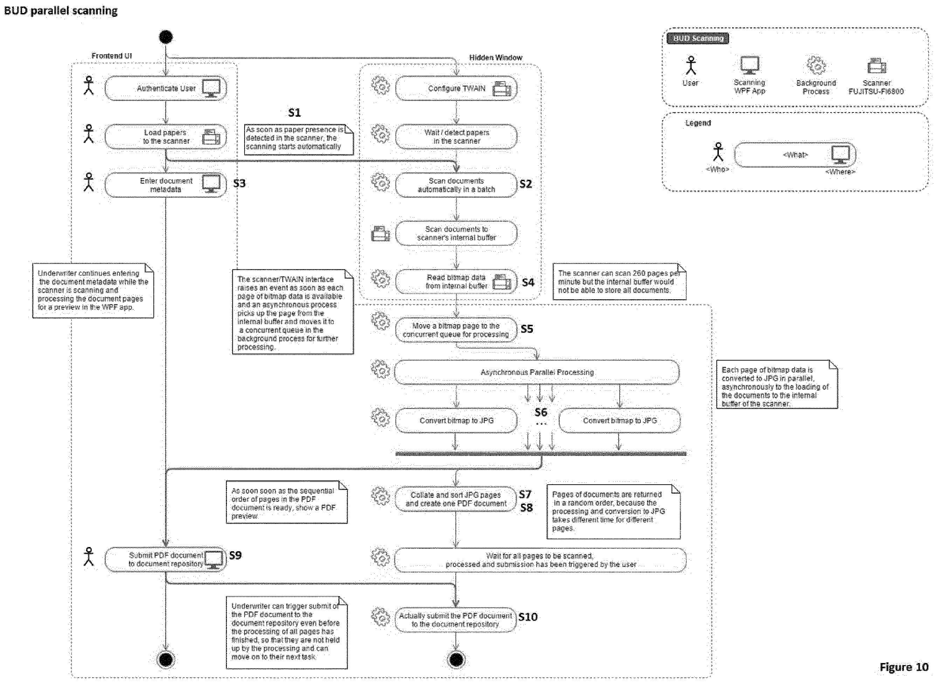

Figure 10 shows the scanning process.

As shown, as soon as the scanner 210 detects the presence of a paper document (S1) the scanning process starts automatically, with the document being scanned as a batch (S2) and processed by a background process while the user continues to input document metadata (S3). More specifically, as each document page is scanned (in bitmap format) it is picked up from the scanner buffer (S4) by an asynchronous process and moved to a concurrent queue (S5) where pages are converted (into JPG format) in parallel (S6), before being sorted and collated (S7) (as different pages take different amounts of time to be processed and converted) into a final pdf document (S8) and on approval from the user (S9) stored in the document repository or DMS 40 (S10).

In some embodiments, the user may trigger the uploading of the final document to the document repository DMS 40 before the final scanned document has been produced.

### - web document upload (drag & drop)

Another route for data input into the source database 20 is provided via email. Typically, an email may comprise a plurality of attachments, which may relate to different aspects of the same matter or to different matters entirely.

A system user, upon having selected a received email and using the web interface to drag it to particular system file or folder, is presented with a further interface listing each of the email attachments allowing each attachment to be individually selected (or deselected) by the user, categorised and notes added. Each selected attachment is then added to the folder with the accompanying metadata.

A queuing engine allows for the attachments to be processed asynchronously.

In some embodiments, text within the email may be selected and is processed in a similar way.

As for documents imported via scanning, tasks are generated and logged in the CRM system 50 in dependence on the imported document(s), based on the document metadata

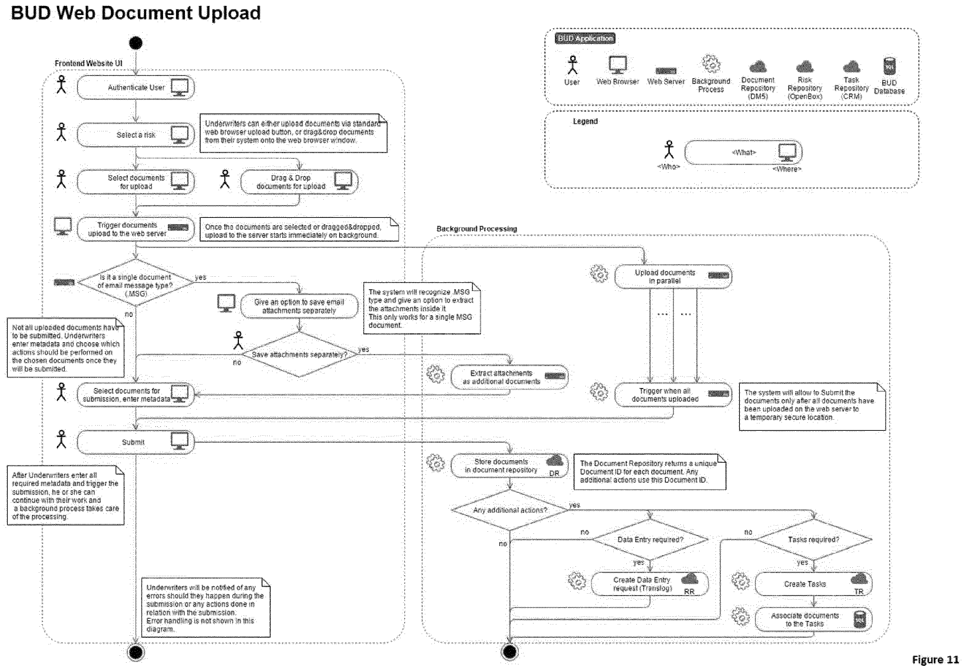

Figure 11 shows the web upload process.

As shown, the uploading of documents is done in parallel by a background process, allowing the user to enter metadata while for example selected attachments are extracted and processed.

### Caching

A caching subsystem is useful in implementations of the system 10 where many user-requested reports are based on the same underlying data as it allows the information management system 10 to provide a user with the experience of near real-time responses to queries.

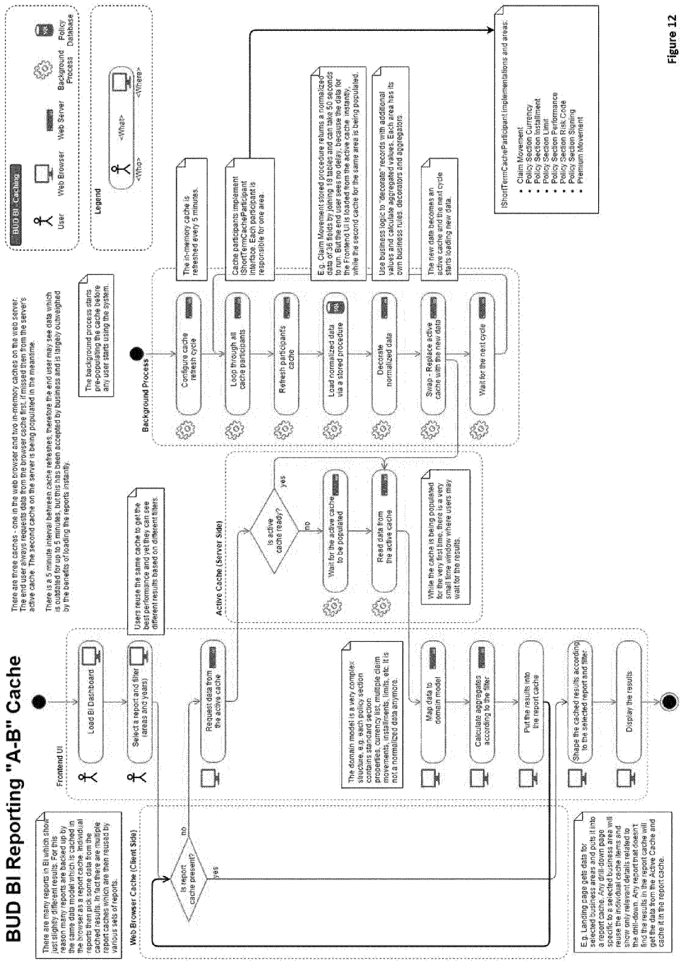

Figure 12 shows the caching process.

Both client-side and (two, A-B) server-side caches are used, three in total:
- Web browser or Report cache, located client-side and using local storage
- Active and In-progress caches, located server-side - data is read from the active cache while the in-progress cache is refreshed or repopulated with the latest data from the master database, ie. query (replica) database (BUD) 30.

Typically, a client-side cache is referred to as level 1 or L1 cache; a server-side cache as a level 2 or L2 cache.

Every 5 minutes a background process starts building up new data into the in-progress cache. This is driven by multiple SQL queries and it can take about a minute to get normalised results for some of those. Data which does not need to be stored in the database and which can be quickly calculated on the web server is then "decorated" on top of the results returned by a SQL query. Once all of the data for all queries has been returned and decorated and the 5 minutes has lapsed, the old active cache is removed and the new data becomes the new active cache.

The end user always effectively requests data from the browser cache first. If this is not available then the request is made from the server's active cache. The second (in-progress) cache on the server is being populated in the meantime.

There possible scenarios include:
- If there is a cache hit in the L1 cache (data is available), then data is shaped to suit a particular report and selected filters because not all data from the report cached needs to be displayed in a particular report. I.e. some reports only need subset of the complex hierarchical structure, but there is no need to load that data from web server or from database if a larger set of the hierarchical data has been already cached for other reports.
- If there is a cache miss in the L1 cache, then data is loaded from the L2 active cache.
- If there is a cache hit in the L2 active cache (data is available), then the data is mapped to a domain model and aggregates are calculated based on a filter selected by the user. The domain model is a very complex hierarchical structure. This happens on the web server. Once the results are returned to the web browser, an appropriate report filter cache is determined and the data is placed there.
- If there is a cache miss in the L2 active cache, then users wait until the L2 active cache is ready - a small window during application and cache start-up.

In practice, the interval between cache refreshes (typically 5 mins) means that the user may see data which is slightly outdated; however, for many implementations this is outweighed by the benefits of loading the reports instantly.

In some embodiments, there are multiple "report" caches, typically whenever reports are required which make use of similar underlying data or data model. This leads to high reusability of each report cache and faster load of similar reports.

### - denormalisation

Further details of the denormalisation process are also shown in Figure 12, including
- Normalised data is stored in a database to reduce duplication and ensure integrity. This data does not include any values which can be computed ("aggregation" step), or data which can be determined based on the values stored in the database ("decoration" step).
- Normalised data is loaded to the backend application via a SQL stored procedure call. This call returns data in a single denormalised table structure, using multiple INNER JOINs.
- Logic is used to "decorate" records with additional values in the backend application. The drive for this is to keep the logic in the backend application to make it a performing and testable solution. Such logic is not present in the database layer.
- The data is mapped to a complex hierarchical domain model. Each policy section contains standard section properties, eg. currency list, multiple claim movements, instalments, limits, etc.
- Aggregations are calculated on various levels of the hierarchical domain model.
- The backend application returns a complete hierarchical domain model to the frontend application for any of the compatible reports. Caching is used so that only the first of the compatible reports requests the data and any other compatible reports will get cached data.
- The frontend application filters out the complete hierarchical domain model to a sub-model which is relevant to the selected report and applied filters.

It will be understood that the present invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A method of providing a user with access to an information processing system, comprising:
detecting a biometric property of the user;
querying the user identity using the detected biometric property against a user directory database and, if the user is identified:
determining a user role; and
generating a user interface with user-selectable options and user-input fields pre-populated in dependence on the determined user role.

2. A method according to claim 1, wherein the biometric property comprises one or more of: palm or fingerprint, retina scan, voiceprint.

3. A method according to claim 1 or 2, wherein the user-selectable options and user-input fields pre-populated in dependence on the determined user identity.

4. A method according to any preceding claim, further comprising, in dependence on the biometric property, importing a document into the information processing system, comprising:
scanning a first document page and subsequently a second document page into a file buffer, first and second scanned page files being stored in the buffer in a first file format;
processing asynchronously and/or in parallel the first and second scanned page files and converting them into a second file format;
collating first and second processed scanned page files into a composite output file in a third file format; and
storing the output file in memory associated with the information processing system.

5. A method according to claim 4, further comprising receiving metadata input in respect of the document while the document is being scanned; and associating the metadata with the output file, preferably processing the document in dependence on the received metadata.

6. A method according to any of claims 4 or 5, wherein processing the document generates a task in the information processing system.

7. A method according to claim 5 or 6, wherein the metadata is input by a user initiating scanning of the document and/or generated via optical character recognition of one or more of: a document page, a scanned page file and the output file.

8. Apparatus for providing a user with access to an information processing system, comprising:
a biometric detector for detecting a biometric property of the user;
means for querying the user identity using the detected biometric property against a user directory database and, if the user is identified:
means for determining a user role; and
means for generating a user interface with user-selectable options and user-input fields pre-populated in dependence on the determined user role.

9. Apparatus according to claim 8, wherein the biometric property comprises one or more of: palm or fingerprint, retina scan, voiceprint.

10. Apparatus according to claim 8 or 9, wherein the means for generating a user interface is adapted to pre-populate the user-selectable options and user-input fields in dependence on the determined user identity.

11. Apparatus according to any of claims 8 to 10, further comprising apparatus for importing a document into the information processing system, comprising:
a scanner adapted to scan a first document page and subsequently a second document page into a file buffer, wherein the first and second scanned page files are stored in the buffer in a first file format;
a processor adapted to:
process asynchronously and/or in parallel the first and second scanned page files and to convert them into a second file format;
to collate first and second processed scanned page files into a composite output file in a third file format; and
to store the output file in memory associated with the information processing system.

12. Apparatus according to claim 11, wherein the processor is adapted to receive metadata input in respect of the document while the document is being scanned and to associate the metadata with the output file, preferably wherein the processor is further adapted to process the document in dependence on the received metadata.

13. Apparatus according to claim 11 or 12, wherein the processor is adapted to generate a task in the information processing system.

14. Apparatus according to any of claims 12 or 13, wherein the metadata is input by a user initiating scanning of the document and/or generated via optical character recognition of one or more of: a document page, a scanned page file and the output file.

15. A computer program and computer program product comprising computer code which when executed is adapted to perform a method as claimed in any of claims 1 to 7.
